# EUROPÄISCHE PATENTSCHRIFT

(11) **EP 3 535 560 B1**
(45) Veröffentlichungstag und Bekanntmachung des Hinweises auf die Patenterteilung: **24.02.2021**
(21) Anmeldenummer: 17781067.8
(22) Anmeldetag: 04.10.2017
(51) Int. Cl.: G01N 3/42, G01M 13/02

(54) **TESTVERFAHREN**
TEST METHOD
PROCÉDÉ DE TEST

(30) Priorität: 04.11.2016 DE 102016221651
(43) Veröffentlichungstag der Anmeldung: 11.09.2019
(73) Patentinhaber: ZF Friedrichshafen AG, 88046 Friedrichshafen (DE); ZF PADOVA S.r.l, 35030 Caselle di Selvazzano (PD) (IT)
(72) Erfinder: ZANATO, Marco, 35042 Este (Padova) (IT); MARANGON, Paolo, 35010 Cadoneghe (Padova) (IT); FINCATO, Alessandro, 35030 Selvazzano Dentro (Padova) (IT)
(74) Vertreter: ZF Friedrichshafen AG
(86) Internationale Anmeldenummer: PCT/EP2017/075097
(87) Internationale Veröffentlichungsnummer: WO 2018/082851

(56) Entgegenhaltungen:
- CN-A- 105 277 455
- KR-A- 20120 085 947
- US-A1- 2012 325 028

## Beschreibung

Die Erfindung betrifft ein ISO-Norm-konformes Testverfahren zum Testen einer Materialhärte von Zahnrädern mittels eines Test-Coupons.

Die Internationale Organisation für Normung - kurz ISO - ist eine internationale Vereinigung von Normungsorganisationen und erarbeitet internationale Normen in allen möglichen Bereichen, mit Ausnahme der Elektrik, der Elektronik und der Telekommunikation. Unter der Bezeichnung ISO-Norm 6336-5 ist ein standardisiertes Verfahren zur Bestimmung der Härte von Zahnrädern bekannt. Dieses Verfahren umfasst u.a. die Verwendung eines sog. Test-Coupons, welcher aus dem gleichen Material hergestellt ist wie die zu prüfenden Zahnräder und den gleichen Bearbeitungsschritten unterworfen wird. Die Bearbeitungsschritte umfassen dabei einerseits die Art und Weise der Herstellung, z.B. einen Schmiedeprozess oder einen Gießprozess, sowie andererseits darauf folgende Bearbeitungsschritte wie z.B. eine Wärmebehandlung der Zahnräder. Anschließend können die Eigenschaften des Test-Coupons untersucht werden, um Rückschlüsse auf die Eigenschaften, insbesondere die Härte, der Zahnräder ziehen zu können. In der Regel haben diese Untersuchungen eine Zerstörung des Test-Coupons zur Folge, da dieser aufgeschnitten bzw. zertrennt werden muss, um die erzielte Härte unterhalb der Oberfläche im Materialinneren prüfen zu können. Ein Aufschneiden bzw. Zerstören der Zahnräder selbst ist somit vorteilhaft nicht notwendig. Die durch die ISO-Norm 6336-5 beschriebenen Test-Coupons haben abhängig vom spezifischem Anwendungsfall fest vorgeschriebene Abmessungen.

Nachteilig am durch die ISO-Norm 6336-5 beschriebenen und standardisierten Verfahren bzw. Test-Coupon ist jedoch, dass der Test-Coupon nur ein einziges Mal verwendet werden kann. Da er zudem fest vorgeschriebene Abmessungen aufweist und somit nicht beliebig in Größe und Gewicht reduziert werden kann, können insbesondere bei hohen Produktionsausstößen von Zahnrädern hohe Kosten alleine für die Herstellung der Test-Coupons anfallen.

Es ist eine Aufgabe der vorliegenden Erfindung, ein verbessertes lSO-Norm-konformes Testverfahren zum Testen einer Materialhärte von Zahnrädern vorzuschlagen.

Diese Aufgabe wird erfindungsgemäß durch ein ISO-Norm 6336-5:2004-07 konformes Testverfahren zum Testen einer Materialhärte von Zahnrädern mittels eines Test-Coupons gemäß Anspruch 1 gelöst. Eine vorteilhafte Ausgestaltung und Weiterbildung der Erfindung geht aus dem abhängigen Anspruch hervor.

Der in dieser Offenbarung offenbarte Test-Coupon zeichnet sich dadurch aus, dass der Test-Coupon als zweistückiger Test-Coupon, bestehend aus einem Mantelkörper und einem Testkörper, ausgebildet ist.

Durch die zweistückige Ausbildung ergibt sich der Vorteil, dass zum Überprüfen der Materialeigenschaften des Test-Coupons, insbesondere einer Materialhärte im Inneren des Test-Coupons, nicht der gesamte Test-Coupon aufgeschnitten bzw. zertrennt und damit zerstört werden muss. Vielmehr ermöglicht der erfindungsgemäße Test-Coupon durch seine zweistückige Ausbildung eine Untersuchung der Materialeigenschaften - und damit verbunden eine Zerstörung - ausschließlich des Testkörpers, wohingegen der Mantelkörper erhalten bleiben kann und wiederverwendet werden kann. Somit können die Kosten zur Durchführung des ISO-Norm-konformen Testverfahren zum Testen der Härte von Zahnrädern gegenüber dem tatsächlichen ISO-Norm-Verfahren wesentlich reduziert werden, da der Testkörper im Vergleich zum durch die tatsächliche ISO-Norm vorgegebenen Test-Coupon bevorzugt kleiner und damit weniger material- und kostenaufwändig ist.

Unter der Bezeichnung "ISO-Norm-konformes Testverfahren" wird im Sinne der Erfindung ein Testverfahren verstanden, welches unter den gleichen Bedingungen wie das entsprechende tatsächliche ISO-Norm-Verfahren zu den gleichen Ergebnissen wie das entsprechende tatsächliche ISO-Norm-Verfahren führt, dabei jedoch nicht auf den in der entsprechenden tatsächlichen ISO-Norm definierten Test-Coupon, sondern den in dieser Offenbarung offenbarten Test-Coupon zurückgreift.

Indem der Test-Coupon die Durchführung eines ISO-Normkonformen Testverfahren ermöglicht, ergibt sich der weitere Vorteil, dass die mittels des Test-Coupons bestimmte Materialhärte identisch zu einer Materialhärte ist, die mittels des in der tatsächlichen ISO-Norm definierten Test-Coupons bestimmt wurde. Die Test-Coupons und Z die in der tatsächlichen ISO-Norm definierten Test-Coupons sind somit hinsichtlich ihrer Testergebnisse austauschbar.

Der Mantelkörper ist zylinderförmig mit einer konzentrischen und scheibenförmigen Ausnehmung an einem Zylinderende zur Aufnahme des Testkörpers ausgebildet Indem der Testkörper in eine Ausnehmung des Mantelkörpers aufgenommen werden kann, ist der Mantelkörper hinsichtlich seiner räumlichen Ausbildung zwangsläufig größer als der Testkörper. Da der Testkörper nur zur einmaligen Verwendung vorgesehen ist, der Mantelkörper hingegen zur vielfachen Verwendung, ergibt sich der Vorteil, dass nur der vergleichsweise kleinere und kostengünstigere der beiden Körper ständig ersetzt werden muss.

Unter einer zylinderförmigen Ausbildung des Mantelkörpers wird verstanden, dass eine Höhe des Mantelkörpers größer ist als ein Durchmesser des Mantelkörpers. Der Mantelkörper kann somit weitgehend der räumlichen Ausbildung des in der tatsächlichen ISO-Norm definierten Test-Coupons entsprechen.

Der Testkörper ist bevorzugt scheibenförmig ausgebildet. Unter einer scheibenförmigen Ausbildung wird im Sinne der Erfindung verstanden, dass eine Höhe des Testkörpers geringer ist als ein Durchmesser des Testkörpers. Ebenso ist auch eine Höhe bzw. Tiefe der scheibenförmigen Ausnehmung geringer als ein Durchmesser der Ausnehmung.

Bevorzugt ist es vorgesehen, dass die räumliche Ausbildung der Ausnehmung der räumlichen Ausbildung des Testkörpers entspricht, zuzüglich einer Toleranz, um ein einfaches Einsetzen und Entnehmen des Testkörpers in die Ausnehmung bzw. aus der Ausnehmung zu ermöglichen.

Der Testkörper kann somit zum Durchführen des Testverfahrens in die Ausnehmung der Mantelkörpers aufgenommen werden. Der Testkörper ist somit an seiner Unterseite und an seinem Scheibenumfang vom Mantelkörper umfasst. Einzig eine Oberseite des Testkörpers ist noch frei. Der Mantelkörper wird während des Testverfahrens bevorzugt auf demjenigen Zylinderende aufgestellt, welches nicht die Ausnehmung mit dem Testkörper aufweist.

Bevorzugt ist es vorgesehen, dass der Mantelkörper eine seitliche Bohrung aufweist, welche eine Außenseite einer Zylindermantelfläche des Mantelkörpers mit der Ausnehmung verbindet. Dies hat sich als vorteilhaft beim Erzielen möglichst identischer Testergebnisse durch den Test-Coupon wie durch den in der tatsächlichen ISO-Norm definierten Test-Coupon erwiesen.

Bevorzugt ist es vorgesehen, dass ein Durchmesser der seitlichen Bohrung 3 mm beträgt. Dies hat sich als ganz besonders gut geeignet zum Erzielen identischer Testergebnisse erwiesen.

Der in dieser Offenbarung offenbarte Test-Coupon ist für das ISO-Norm 6336-5:2004-07 konforme Testverfahren zum Testen der Materialhärte von Zahnrädern gemäß Anspruch 1 ausgebildet. Die ISO-Norm 6336-5 definiert ein weit verbreitetes und anerkanntes Testverfahren zum Testen der Materialhärte von Zahnrädern. Indem der Test-Coupon für ein ISO-Norm 6336-5 konformes Testverfahren ausgebildet ist, können die mittels dieses weit verbreiteten und anerkannten Testverfahrens erlangten Testergebnisse vergleichsweise kostengünstig durch Verwendung des Test-Coupons erlangt werden.

Die spezifische Ausbildung des Test-Coupons für das ISO-Norm 6336-5 konforme Testverfahren erfolgt dabei durch Anpassung der räumlichen Abmessung des Mantelkörpers bzw. des Testkörpers, insbesondere ausschließlich durch eine Anpassung der räumlichen Abmessung des Mantelkörpers.

Bevorzugt ist es vorgesehen, dass der Test-Coupon (1) als Modul 5 konformer Test-Coupon, als Modul 8 konformer Test-Coupon oder als Modul 10 konformer Test-Coupon gemäß der ISO-Norm 6336-5 ausgebildet ist. Dies sind gemäß der ISO-Norm 6336-5 gängige mögliche Ausbildungsformen des Test-Coupons.

Bevorzugt ist es vorgesehen, dass der Test-Coupon in allen Beispielen jeweils einen identisch ausgebildeten Testkörper aufweist und ausschließlich über eine Änderung der Abmessungen bzw. des Materials des Mantelkörpers an die jeweils gewünschte Ausbildungsform angepasst ist. Da somit für alle

Beispiele des Test-Coupons stets ein identisch ausgebildeter Testkörper verwendet wird, ergibt sich eine hohe Zahl an gleichen Teilen, nämlich den Testkörpern, wodurch die Kosten zur Herstellung des erfindungsgemäßen Test-Coupons weiter reduziert werden können.

Es ist vorgesehen, dass der Mantelkörper aus Stahl, insbesondere aus Stahl gemäß AISI 310, besteht. Bei einer Ausbildung des Mantelkörpers aus Stahl, insbesondere aus Stahl gemäß AISI 310, ergeben sich nicht nur besonders eng an die Testergebnisse gemäß der tatsächlichen ISO-Norm angelehnte Testergebnisse, sondern darüber hinaus ergibt sich eine besonders hohe Wiederverwendbarkeit des Mantelkörpers für weitere Durchläufe des Testverfahrens. Bei einer Ausbildung des Mantelkörpers aus Stahl gemäß AISI 310 hat sich in Versuchsreihen gezeigt, dass der Mantelkörper ca.

120 mal wiederverwendet werden kann, bevor die mittels des Test-Coupons erlangten Testergebnisse beginnen, zunehmend von den Testergebnissen, welche mittels eines nach der tatsächlichen ISO-Norm hergestellten Test-Coupons erlangt wurden, abzuweichen.

Es ist vorgesehen, dass der Testkörper hinsichtlich seines Materials und seiner Herstellung den zu testenden Zahnrädern entspricht. Indem das Material und die Herstellung des Testkörpers dem Material und der Herstellung der zu testenden Zahnräder entsprechen, verhält sich der Testkörper auch bei einer Wärmebehandlung bzw. Härtung sehr ähnlich zu den zu testenden Zahnrädern. Dies begünstigt weitestgehend identische Testergebnisse des Test-Coupons und des nach der tatsächlichen ISO-Norm hergestellten Test-Coupons.

Unter dem Begriff "Material des Testkörpers" wird eine konkrete Materialzusammensetzung des Testkörpers verstanden, z.B. eine bestimmte Stahllegierung mit einem definierten Anteil an Kohlenstoff.

Unter dem Begriff "Herstellung des Testkörpers" wird eine konkrete Herstellungsweise des Testkörpers verstanden, z.B. ob es sich um einen geschmiedeten, gewalzten oder gegossenen Testkörper handelt.

Gemäß der Erfindung ist es vorgesehen, dass das Verfahren die Schritte umfasst:
- dass ein Testkörper einer identischen Herstellung aus einem identischen Material unterworfen wird wie die zu testenden Zahnräder,
- dass der Testkörper in eine konzentrische und scheibenförmige Ausnehmung an einem Zylinderende eines Mantelkörpers eingesetzt wird,
- dass der Test-Coupon gemeinsam mit den zu testenden Zahnrädern wärmebehandelt wird,
- dass der Testkörper dem Mantelkörper entnommen wird,
- dass die Materialhärte des Testkerns bestimmt wird und
- dass anhand der Materialhärte des Testkerns die Materialhärte der Zahnräder bestimmt wird.

Die Ausführung dieser Schritte führt in Summe zu Testergebnissen, welche weitestgehend identisch sind zu Testergebnissen, die mittels eines Testverfahrens gemäß der tatsächlichen ISO-Norm, an welche das erfindungsgemäße ISO-Normkonforme Testverfahren angelehnt ist, erlangt wurden.

Gemäß einer weiteren bevorzugten Ausführungsform der Erfindung ist es vorgesehen, dass die Materialhärte des Testkörpers in einer räumlichen Mitte des Testkörpers bestimmt wird. Aufgrund von Phasenverschiebungen der Temperatur im Inneren des Testkörpers gegenüber einer Temperatur in der Umgebung des Testkörpers zeigt eine Wärmebehandlung unterschiedliche Auswirkungen auf die Oberfläche des Testkörpers und das Innere des Testkörpers. Wie sich gezeigt hat, lässt gerade die Materialhärte im Inneren des Testkörpers, insbesondere in einer räumlichen Mitte des Testkörpers, zuverlässige Rückschlüsse auf eine Materialhärte der Zahnräder zu. Von Interesse ist dabei in aller Regel nicht nur die reine Oberflächenhärte der Zahnräder sondern vielmehr auch eine Materialhärte der Zahnräder in deren Innerem, da diese Materialhärte im Inneren maßgeblich ist für die Belastbarkeit der Zahnräder.

Bevorzugt ist es vorgesehen, dass der Testkörper mittig aufgeschnitten bzw. zertrennt wird, um die Materialhärte in seiner räumlichen Mitte zu bestimmen. Nachfolgend wird die Erfindung anhand von in den Figuren dargestellten Ausführungsformen beispielhaft erläutert.

Es zeigen:
- Fig. 1: schematisch und beispielhaft einen Querschnitt durch einen zweistückigen Test-Coupon,
- Fig. 2: beispielhaft drei unterschiedliche Beispiele von Test-Coupons,
- Fig. 3: beispielhaft einen Testkörper für einen Test-Coupon sowie drei einstückige Test-Coupons,
- Fig. 4: beispielhaft eine Vergleichsmessung eines in dieser Offenbarung offenbarten Test-Coupons und eines gemäß ISO-Norm 6336-5 ausgebildeten Test-Coupons und
- Fig. 5: eine beispielhafte Ausführungsform eines erfindungsgemäßen Testverfahrens in Form eines Flussdiagramms.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

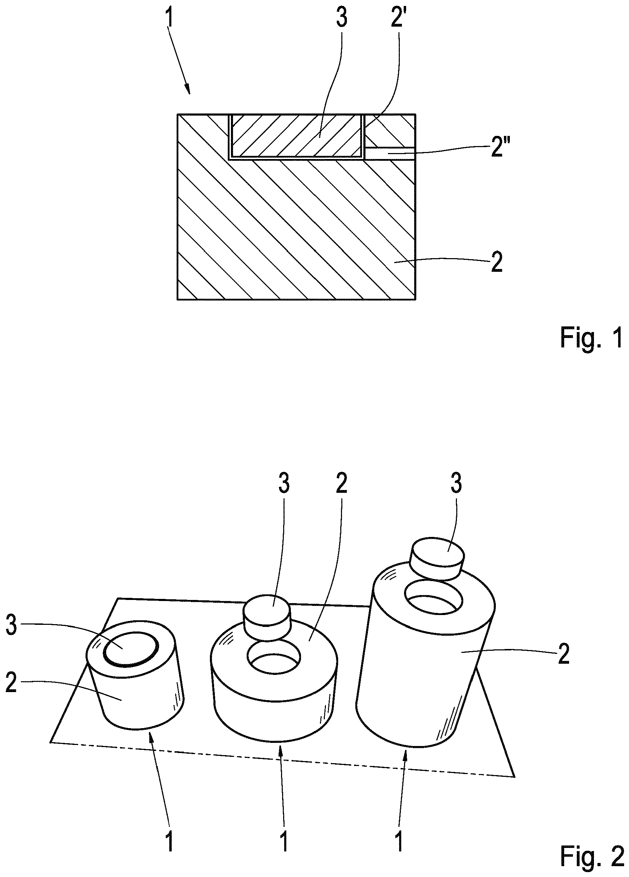

Fig. 1 zeigt schematisch und beispielhaft einen Querschnitt durch einen zweistückigen Test-Coupon 1 für ein ISO-Norm-konformes Testverfahren zum Testen einer Materialhärte von Zahnrädern, bestehend aus einem Mantelkörper 2 und einem Testkörper 3. Der Mantelkörper 2 ist dabei zylinderförmig mit einer konzentrischen und scheibenförmigen Ausnehmung 2' an einem oberen Zylinderende ausgebildet. Die Ausnehmung 2' dient der Aufnahme des ebenfalls scheibenförmig ausgebildeten Testkörpers 3. Die Abmessungen der Ausnehmung 2' entsprechen dabei den Abmessungen des Testkörpers 3 zuzüglich einer Toleranz, um ein problemloses Aufnehmen des Testkörpers 3 in die Ausnehmung 2' sowie ein problemloses Entfernen des Testkörpers 3 aus der Ausnehmung 2' zu gewährleisten.

Wie weiterhin zu sehen ist, weist der Mantelkörper 2 eine seitliche Bohrung 2" auf, welche eine Außenseite einer Zylindermantelfläche des Mantelkörpers 2 mit der Ausnehmung 2' verbindet. Der Test-Coupon 1 mit den in Fig. 1 dargestellten Abmessungen entspricht einem durch die ISO-Norm definierten, als Modul 5 ausgebildeten Test-Coupon, wobei der Mantelkörper 2 aus Stahl gemäß AISI 310 besteht. Der Testkörper 3 hingegen besteht aus dem gleichen Material wie die zu testenden Zahnräder und wurde der gleichen Herstellung unterworfen.

Fig. 2 zeigt beispielhaft drei unterschiedliche Beispiele von Test-Coupons 1. Jeder der gezeigten Test-Coupons 1 besteht aus einem Mantelkörper 2 sowie einem Testkörper 3. Die in Fig. 2 dargestellten Test-Coupons 1 sind beispielsgemäß als den als Modul 5 (links in Fig. 2), Modul 8 (mittig in Fig. 2) und Modul 10 (rechts in Fig. 2) ausgebildeten, der ISO-Norm 6336-5 entsprechende Test-Coupons 1 ausgebildet.

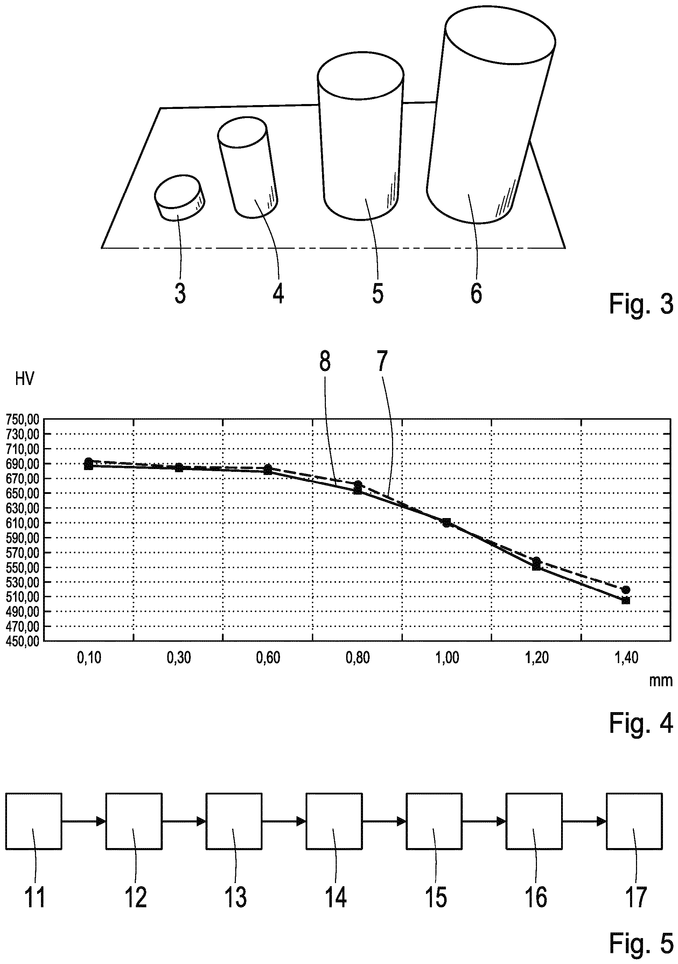

Fig. 3 zeigt beispielhaft einen Testkörper 3 für einen Test-Coupon 1 sowie drei einstückige Test-Coupons 4, 5 und 6, welche gemäß der ISO-Norm 6336-5 ausgebildet sind. Die Test-Coupons 4, 5 und 6 sind durch Ihre Normierung allgemein bekannt und finden breite Verwendung im Stand der Technik. Der Test-Coupon 4 ist dabei als sog. Modul 5 gemäß der ISO-Norm 6336-5 ausgebildet, der Test-Coupon 5 als Modul 8 und der Test-Coupon 6 als Modul 10. Wie zu sehen ist, ist der Testkörper 3 vergleichsweise deutlich kleiner als die Test-Coupons 4, 5 und 6. Da sowohl der Testkörper 3 als auch die bekannten Test-Coupons 4, 5 und 6 nur für ein einziges Testverfahren verwendet werden können und anschließend verschrottet werden, lässt sich durch die Verwendung des kleineren und günstigeren Testkörpers 3 in einem Test-Coupon viel Material und damit Kostenaufwand einsparen.

Fig. 4 zeigt beispielhaft eine Vergleichsmessung eines in dieser Offenbarung offenbarten Test-Coupons 1 und eines als Modul 8 ausgebildeten Test-Coupons 5 gemäß ISO-Norm 6336-5. Der der Vergleichsmessung zugrunde gelegte Test-Coupon 1 ist dabei dem als Modul 8 ausgebildeten Test-Coupon 5 entsprechend ausgebildet. Die gezeigte Vergleichsmessung besteht aus verschiedenen Messpunkten der Materialhärte sowohl des Test-Coupons 1 als auch des gemäß ISO-Norm 6336-5 ausgebildeten Test-Coupons 5, welche in ein Diagramm eingetragen und zu Messkurven 7, 8 verbunden wurden. Die x-Achse zeigt eine Materialtiefe des jeweiligen Messpunkts, also dessen Entfernung zur Oberfläche des Test-Coupons 1 bzw. des Test-Coupons 5 in der Einheit mm an. Die y-Achse zeigt die gemessene Materialhärte in der Einheit HV an. Die gestrichelte Messkurve 7 zeigt die Messdaten des Test-Coupons 1, während die durchgezogene Messkurve 8 die Messdaten des gemäß ISO-Norm 6336-5 ausgebildeten Test-Coupons 5 zeigt. Wie zu sehen ist, liegen beide Messkurven 7, 8 sehr nah beieinander, sodass von einer Gleichwertigkeit des erfindungsgemäßen Testverfahrens und des tatsächlichen ISO-Norm-Testverfahrens bzw. von einer Austauschbarkeit des Test-Coupons 1 und des gemäß ISO-Norm 6336-5 ausgebildeten Test-Coupons 5 gesprochen werden kann.

Fig. 5 zeigt eine beispielhafte Ausführungsform eines erfindungsgemäßen ISO-Normkonformen Testverfahrens zum Testen einer Materialhärte von Zahnrädern mittels eines Test-Coupons 1 in Form eines Flussdiagramms. In einem ersten Verfahrensschritt 11 wird ein Testkörper 3 einer identischen Herstellung aus einem identischen Material unterworfen wird wie die zu testenden Zahnräder. In Schritt 12 wird der Testkörper 3 in eine konzentrische und scheibenförmige Ausnehmung 2' an einem Zylinderende eines Mantelkörpers 2 des Test-Coupons 1 eingesetzt. Im folgenden Schritt 13 wird der Test-Coupon 1 gemeinsam mit den zu testenden Zahnrädern wärmebehandelt. Im Anschluss an die Wärmebehandlung wird der Testkörper in Schritt 14 dem Mantelkörper 2 wieder entnommen. In Schritt 15 wird der Testkörper 3 nun mittig entlang seines Querschnitts zertrennt, so dass eine räumliche Mitte des Testkörpers 3 für Messungen der Materialhärte zugänglich ist. Im folgenden Verfahrensschritt 16 wird die Materialhärte des Testkörpers 3 bestimmt. Schließlich wird in Schritt 17 anhand der Materialhärte des Testkörpers 3 die Materialhärte der Zahnräder bestimmt.

### Bezugszeichen

- 1: Test-Coupon
- 2: Mantelkörper
- 2': Ausnehmung
- 2": seitliche Bohrung
- 3: Testkörper
- 4: Test-Coupon, Modul 5
- 5: Test-Coupon, Modul 8
- 6: Test-Coupon, Modul 10
- 7: Messkurve
- 8: Messkurve
- 11: Herstellung des Testkörpers
- 12: Einsetzen des Testkörpers
- 13: Wärmebehandlung
- 14: Entnehmen des Testkörpers
- 15: Zertrennen des Testkörpers
- 16: Bestimmen der Materialhärte des Testkörpers
- 17: Bestimmen der Materialhärte der Zahnräder

## Patentansprüche

1. ISO-Norm 6336-5:2004-07 konformes Testverfahren zum Testen einer Materialhärte von Zahnrädern mittels eines Test-Coupons (1), wobei ein ISO-Norm-konformes Testverfahren ein Testverfahren ist, welches unter den gleichen Bedingungen wie das entsprechende tatsächliche ISO-Norm-Verfahren zu den gleichen Ergebnissen wie das entsprechende tatsächliche ISO-Norm-Verfahren führt, dabei jedoch nicht auf den in der entsprechenden tatsächlichen ISO-Norm definierten Test-Coupon, sondern auf einen Test-Coupon zurückgreift, der als zweistückiger Test-Coupon (1), bestehend aus einem Mantelkörper (2) und einem Testkörper (3), ausgebildet ist, wobei der Mantelkörper (2) aus Stahl besteht, wobei der Testkörper (3) hinsichtlich seines Materials und seiner Herstellung den zu testenden Zahnrädern entspricht,**dadurch gekennzeichnet, dass** das Verfahren die Schritte umfasst:
- dass der Testkörper (3) einer identischen Herstellung aus einem identischen Material unterworfen wird wie die zu testenden Zahnräder,
- dass der Testkörper (3) in eine konzentrische und scheibenförmige Ausnehmung (2") an einem Zylinderende des Mantelkörpers (2) eingesetzt wird,
- dass der Test-Coupon (1) gemeinsam mit den zu testenden Zahnrädern wärmebehandelt wird,
- dass der Testkörper (3) dem Mantelkörper (2) entnommen wird,
- dass die Materialhärte des Testkörpers (3) bestimmt wird und
- dass anhand der Materialhärte des Testkörpers (3) die Materialhärte der Zahnräder bestimmt wird.

2. Verfahren nach Anspruch 1,
**dadurch gekennzeichnet, dass** die Materialhärte des Testkörpers (3) in einer räumlichen Mitte des Testkörpers (3) bestimmt wird.

## Claims

1. Test method conforming to ISO standard 6336-5:2004-07 for testing a material hardness of gearwheels by means of a test coupon (1), an ISO-standard-conforming test method being a test method which, under the same conditions as the corresponding actual ISO standard method leads to the same results as the corresponding actual ISO standard method, though it does not rely on the test coupon defined in the corresponding actual ISO standard but on a test coupon that is formed as a two-piece test coupon (1), consisting of a casing body (2) and a test body (3), the casing body (2) being made of steel, the test body (3) corresponding in terms of its material and its production to the gearwheels to be tested, **characterized in that** the method comprises the steps:
- that the test body (3) undergoes identical production from an identical material as the gearwheels to be tested,
- that the test body (3) is inserted into a concentric and disc-shaped recess (2") at one end of the cylinder of the casing body (2),
- that the test coupon (1) is heat-treated together with the gearwheels to be tested,
- that the test body (3) is removed from the casing body (2),
- that the material hardness of the test body (3) is determined and
- that the material hardness of the gearwheels is determined on the basis of the material hardness of the test body (3).

2. Method according to Claim 1,
**characterized in that** the material hardness of the test body (3) is determined at a spatial centre of the test body (3).

## Revendications

1. Procédé de test conforme à la norme ISO 6336-5:2004-07 pour tester la dureté de matériau de roues dentées au moyen d'un coupon de test (1), un procédé de test conforme à la norme ISO étant un procédé de test qui, dans les mêmes conditions que le procédé correspondant proprement dit selon la norme ISO, conduit aux mêmes résultats que le procédé correspondant proprement dit selon la norme ISO, mais ne se rapporte pas en l'occurrence au coupon de test défini dans la norme ISO correspondante proprement dite mais à un coupon de test qui est réalisé en tant que coupon de test en deux parties (1), constitué d'un corps d'enveloppe (2) et d'un corps de test (3), le corps d'enveloppe (2) étant constitué d'acier, le corps de test (3), en ce qui concerne son matériau et sa fabrication, correspondant aux roues dentées à tester, **caractérisé en ce que** le procédé comprend les étapes suivantes :
- le corps de test (3) est soumis à une fabrication identique à partir d'un matériau identique à celle des roues dentées à tester,
- le corps de test (3) est inséré dans un évidement concentrique et en forme de disque (2'') à une extrémité cylindrique du corps d'enveloppe (2),
- le coupon de test (1) est soumis à un traitement à chaud conjointement avec les roues dentées à tester,
- le corps de test (3) est enlevé du corps d'enveloppe (2),
- la dureté de matériau du corps de test (3) est déterminée et
- la dureté de matériau des roues dentées est déterminée à l'aide de la dureté de matériau du corps de test (3).

2. Procédé selon la revendication 1,
**caractérisé en ce que** la dureté de matériau du corps de test (3) est déterminée au centre physique du corps de test (3).
